# EUROPÄISCHE PATENTANMELDUNG

(11) **EP 1 329 363 A1**
(43) Veröffentlichungstag der Anmeldung: **23.07.2003**
(21) Anmeldenummer: 02405025.4
(22) Anmeldetag: 16.01.2002
(51) Int. Cl.: B60R 19/34

(54) **Energieabsorbierendes Deformationselement für Fahrzeuge**

(71) Anmelder: Alcan Technology & Management AG, 8212 Neuhausen am Rheinfall (CH)
(72) Erfinder: Liebhard, Oliver, 8226 Schleitheim (CH); Gehrig, Markus, 8200 Schaffhausen (CH)

(57) **Zusammenfassung**

Die Erfindung betrifft ein Deformationselement (1) aus einem Ein- oder Mehrkammer-Hohlprofil mit einer Profillängsachse zur Aufnahme von in Richtung der Profillängsachse einwirkender Aufprallenergie. Das Deformationselement (1) enthält äussere Profilwände (4a,b), welche innen und aussen liegende Profilwandflächen (9, 10) ausbilden. Die äusseren Profilwände (4a,b) sind in Profilwand-Endabschnitte (5a,b) und Profilwand-Zwischenabschnitte (6a,b) gegliedert, wobei die gegeneinander stossenden Profilwand-Endabschnitte (5a,b) zweier äusseren Profilwände (4a,b) Eckbereiche (2a-d) mit Ecken (3a-d) ausbilden. Das Deformationselement (1) zeichnet sich dadurch aus, dass die Wanddicken (8b,d) der Profilwand-Endabschnitte (5a,b) grösser sind, als die Wanddicke (8a,c) der den Profilwand-Endabschnitten (5a,b) benachbarten Profilwandabschnitte (6a,b), so dass im Eckbereich (2a-d) eine Profilwandverdickung ausgebildet ist.

## Beschreibung

Vorliegende Erfindung betrifft ein Deformationselement aus einem Ein- oder Mehrkammer-Hohlprofil mit einer Profillängsachse zur Aufnahme von in Richtung der Profillängsachse einwirkender Aufprallenergie, enthaltend innen und aussen liegende Profilwandflächen ausbildende äussere Profilwände mit Profilwand-Endabschnitten und Ecken ausbildende Eckbereiche, wobei die Eckbereiche durch zwei gegeneinander stossende Profilwand-Endabschnitte gebildet sind. Ferner betrifft die Erfindung die Verwendung solcher Deformationselemente.

Rohrförmige bzw. hohlprofilartige Deformationselemente zur Aufnahme von stirnseitig auf die Deformationselemente einwirkender Aufprallenergie sind allgemein bekannt. Die Absorption der Aufprallenergie geschieht durch gleichmässiges Falten der Profilwände beim Stauchen des Deformationselements.

Die CH 691 731 beschreibt beispielsweise ein Fahrzeug mit einer Stossstange, welche über Deformationselemente an Fahrzeuglängsträgern befestigt ist. Die Deformationselemente bestehen aus Mehrkammerhohlprofilen, mit wenigstens einem längslaufenden Innensteg. Ein Teil der Aufprallenergie wird durch die balgförmige Faltenbildung beim Stauchen des Deformationselements in Profillängsrichtung absorbiert.

Deformationselemente bzw. energieabsorbierende Strukturen sollen eine möglichst hohe spezifische Energieabsorption aufweisen, d.h. es soll möglichst viel Energie pro eingesetzte Masse absorbiert werden. Nur auf diese Weise kann den Forderungen nach möglichst leichten und gleichzeitig sicheren, d.h. mit energieabsorbierenden Strukturen ausgerüsteten, Fahrzeugen entsprochen werden.

Der Erfindung liegt deshalb die Aufgabe zugrunde, ein Deformationselement der eingangs genannten Art vorzuschlagen, welches eine höhere spezifische Energieabsorption aufweist als herkömmliche Deformationselemente der gleichen Art. Das Deformationselement soll unter Ausbildung einer balgförmigen Faltstruktur die einwirkende Aufprallenergie aufnehmen.

Erfindungsgemäss wird die Aufgabe dadurch gelöst, dass die Wanddicke eines Profilwand-Endabschnitts wenigstens eines Eckbereichs, wenigstens über einen in Profillängsrichtung gemessenen Profillängsabschnitt grösser ist als die Wanddicke des zum Profilwand-Endabschnitt benachbarten Profilwandabschnitts, so dass im Eckbereich eine Profilwandverdickung ausgebildet ist, wobei im Vergleich zu einem Deformationselement mit uniformen Wanddicken jedoch von gleicher Gestalt und Gesamtmasse eine höhere spezifische Energieabsorption erzielt wird.

Die aussen liegende Profilwandfläche ist die gegen aussen weisende, und die innen liegende Profilwandfläche die nach innen weisende Profilwandfläche der äusseren Profilwand.

Die Wanddicke wird vorzugsweise orthogonal zu einer dazugehörigen Profilwandmittelfläche gemessen. Die Profilwandmittelfläche ist die mittig zwischen den beiden Profilwandflächen verlaufende Fläche.

In einer bevorzugten Ausführung der Erfindung ist die Wanddicke der Profilwand-Endabschnitte wenigstens eines Eckbereichs, vorzugsweise aller Eckbereiche, grösser als die Wanddicke der den Profilwand-Endabschnitten benachbarten Profilwandabschnitte. Ferner ist die Wanddicke des oder der Profilwand-Endabschnitte bevorzugt über die gesamte Länge des Deformationselements grösser als die Wanddicke des dem entsprechenden Profilwand-Endabschnitt benachbarten Profilwandabschnitts.

Die Wanddicke des Profilwand-Endabschnitts kann zur Ecke hin stufenartig oder kontinuierlich zunehmen. Ferner kann die Wanddicke zwischen dem Profilwand-Endabschnitt und dem benachbarten Profilwandabschnitt sprunghaft zunehmen. Die maximale Wanddicke des Profilwand-Endabschnitts ist beispielsweise wenigstens 5%, vorzugsweise wenigstens 15% und insbesondere wenigstens 20% grösser als die minimale Wanddicke des zum Profilwand-Endabschnitt benachbarten Profilwandabschnitts. Ferner ist die maximale Wanddicke des Profilwand-Endabschnitts bevorzugt höchstens 200%, insbesondere höchstens 150% und vorteilhaft höchstens 100% grösser als die minimale Wanddicke des zum Profilwand-Endabschnitt benachbarten Profilwandabschnitts.

Die mittlere Wanddicke des Profilwand-Endabschnitts ist beispielsweise wenigstens 5%, vorzugsweise wenigstens 15% und insbesondere wenigstens 20%, und höchstens 200%, vorzugsweise höchstens 100% und insbesondere höchstens 60% grösser als die mittlere Wanddicke des zum Profilwand-Endabschnitt benachbarten Profilwandabschnitts.

Die Wanddicke des zum Profilwand-Endabschnitt benachbarten Profilwandabschnitts kann variabel oder vorzugsweise uniform sein.

Die aussen und/oder innen liegenden Profilwandflächen können plan oder gekrümmt sein. Die aussen liegenden Profilwandflächen sind in bevorzugter Ausführung plan, wobei die innen liegenden Profilwandflächen in den Profilwand-Endabschnitten eine relativ zur aussen liegenden Profilwandfläche gemessene, die Wanddicke erhöhende Steigung aufweist.

Das Deformationselement kann einen polygonalen Querschnitt aufweisen und beispielsweise dreieckig, viereckig oder sechseckig sein. Das Deformationselement ist vorzugsweise kastenförmig ausgebildet. Das Deformationselement kann ein Einoder Mehrkammer-Hohlprofil mit einer, zwei, drei, vier oder mehr Profilkammern sein.

Die Profilwand-Endabschnitte der Eckbereiche stossen beispielsweise bei rechtekkiger bzw. kastenförmiger Querschnittsform des Profils in einem Winkel von 85-95° (Winkelgrade) und bei hexagonaler Querschnittsform des Profils in einem Winkel von 115-125° gegeneinander.

Zwischen zwei Profilwand-Endabschnitten einer äusseren Profilwand sind jeweils bevorzugt Profilwand-Zwischenabschnitte angeordnet, wobei die Profilwand-Zwischenabschnitte den den Profilwand-Endabschnitten benachbarten Profilwandabschnitten entsprechen.

Die Länge des Profilwand-Endabschnitts eines Eckbereichs entspricht beispielsweise wenigstens 5%, vorzugsweise wenigstens 10 %, insbesondere wenigstens 15%, vorteilhaft wenigstens 20%, und höchstens 45%, vorzugsweise höchstens 35%, insbesondere höchstens 25% der Länge der dazugehörigen äusseren Profilwand.

In einer weiteren Ausführung der Erfindung ist das Deformationselement ein Mehrkammer-Hohlprofil mit einer oder mehreren, Knotenbereiche ausbildenden inneren Profilwänden mit Profilwand-Endabschnitten. Die inneren Profilinnenwände können orthogonal und/oder mittig und parallel zu den äusseren Profilwänden verlaufen und das Hohlprofil in mehrere insbesondere zwei oder vier, Kammern unterteilen. Die inneren Profilwände können z.B. auch diagonal verlaufen und gegenüberliegende Ecken verbinden.

Die Knotenbereiche werden durch wenigstens zwei in einem Winkel gegeneinander stossenden Profilwand-Endabschnitte der inneren Profilwände oder durch wenigstens zwei einem in einem Winkel gegeneinander stossenden Profilwand-Endabschnitte einer inneren und äusseren Profilwand gebildet.

Die Eckbereiche des Mehrkammer-Hohlprofils können wie vorangehend beschriebenen ausgestaltet sein.

Die Wanddicke wenigstens eines, vorzugsweise aller Profilwand-Endabschnitte wenigstens eines, vorzugsweise aller, Knotenbereiche ist grösser als die Wanddikke des zum Profilwand-Endabschnitt benachbarten Profilwandabschnitts.

Die Wanddicke des Profilwand-Endabschnitts kann zum Knoten hin stufenförmig und vorzugsweise kontinuierlich zunehmen. Die maximale Wanddicke des Profilwand-Endabschnitts eines Knotenbereichs ist wenigstens 5%, vorzugsweise wenigstens 15%, insbesondere wenigstens 20% und höchstens 200%, vorzugsweise höchstens 150% und insbesondere höchstens 100% grösser ist als die minimale Wanddicke des zum Profilwand-Endabschnitt benachbarten Profilwandabschnitts.

Die mittlere Wanddicke des Profilwand-Endabschnitts eines Knotenbereichs ist wenigstens 5%, vorzugsweise wenigstens 15%, insbesondere wenigstens 20% und höchstens 200%, vorzugsweise höchstens 100% und insbesondere höchstens 60% grösser ist als die mittlere Wanddicke des zum Profilwand-Endabschnitt benachbarten Profilwandabschnitts.

Die Wanddicke des zum Profilwand-Endabschnitt eines Knotenbereichs benachbarten Profilwandabschnitts ist vorzugsweise uniform.

Zwischen zwei Profilwand-Endabschnitten einer inneren Profilwand ist vorzugsweise jeweils ein Profilwand-Zwischenabschnitt angeordnet, wobei der Profilwand-Zwischenabschnitt einem dem Profilwand-Endabschnitt benachbarten Profilwandabschnitt entspricht.

In abgewandelter Ausführung der Erfindung können ferner auch Mehrkammer-Hohlprofile vorgesehen sein, bei welchen lediglich die Eckbereiche und/oder lediglich die Knotenbereiche in den Profilwänden und/oder im Profilhohlraum eine erfindungsgemässe Wandverdickung der Profilwand-Endabschnitte aufweisen.

In einer bevorzugten Ausführung der Erfindung sind die mittleren oder maximalen Wanddicken der Profilwand-Endabschnitte der im Profilinnenraum liegenden Knotenbereiche kleiner als die mittleren oder maximalen Wanddicken der Profilwand-Endabschnitte der Eckbereiche. Die mittleren oder maximalen Wanddicken der Profilwand-Endabschnitte der an den äusseren Profilwänden liegenden Knotenbereiche sind vorzugsweise kleiner als die mittleren oder maximalen Wanddicken der Profilwand-Endabschnitte der Eckbereiche und vorzugsweise grösser als die mittleren oder maximalen Wanddicken der Profilwand-Endabschnitte der im Profilinnenraum liegenden Knotenbereiche.

Anders formuliert weisen in einer bevorzugten Ausführung die im Profilinnenraum liegenden Knotenbereiche kleinere Wandverdickungen auf als die an den Profilwänden liegenden Knotenbereiche und Letzere weisen kleinere Wandverdickungen auf als die Eckbereiche des Profils. Auf diese Weise kann vermieden werden, dass die Innenbereiche des Profils gegenüber den Eckbereichen übermässig verstärkt bzw. versteift werden und infolgedessen die Neigung Knickungen erhöht wird. Ferner wird durch die genannte Massnahme die Ausnutzung des Deformationselements optimiert, d.h. der Deformationsweg ist vergleichsweise länger.

Die Wanddicke der äusseren und/oder inneren Profilwände, insbesondere in den Profilwand-Endabschnitten, kann an den an entsprechenden Querschnittsstellen über die Länge des Profils konstant oder variabel sein. In einer geeigneten Ausführung der Erfindung ist die Wanddicke im Endbereich des Profils, d.h. im stirnseitigen Profil-Endabschnitt, an welchem der Aufprall stattfindet, querschnittlich über die gesamte äussere und/oder innere Profilwand von Ecke zu Ecke und in den Knotenbereichen uniform, d.h. dem Stand der Technik entsprechend ausgebildet. In dem dem Profil-Endabschnitt anschliessenden Profillängsabschnitt sind in den Eckbereichen und/oder Knotenbereichen Profilwand-Endabschnitte gemäss Erfindung ausgebildet, wobei die Wanddicken in den Profilwand-Endabschnitten an den entsprechenden Querschnittsstellen in Profillängsrichtung eine gestufte oder kontinuierliche Zunahme aufweisen können.

Da eine Erhöhung der Wanddicke in den Eck- bzw. Knotenbereichen zu höheren Kraftspitzen führt, weist die vorangehend beschriebene Ausgestaltung des erfindungsgemässen Deformationselements eine verminderte initiale Kraftspitze auf. Es können jedoch auch andere Mittel, wie z.B. Eindellungen in den äusseren Profilwänden, zur Verminderung der initialen Kraftspitze vorgesehen sein.

Das Längenverhältnis vom Profilwand-Endabschnitt zur äusseren Profilwand bei Mehrkammer-Hohlprofilen bezieht sich vorzugsweise auf von Eckbereich zu Knotenbereich gemessenen äusseren Profilwändlängen.

Das erfindungsgemässe Deformationselement kann aus Kunststoff, z.B. faserverstärktem Kunststoff, oder aus Metall, vorzugsweise aus einem Leichtmetall bestehen. Das Deformationselement besteht besonders bevorzugt aus einem Aluminium bzw. einer Aluminiumlegierung. Das erfindungsgemässe Deformationselement aus Metall kann beispielsweise aus Blechelementen gefertigt sein. In bevorzugter Ausführung ist das Deformationselement jedoch ein Strangpressprofil.

Erfindungsgemässe Deformationselemente finden Verwendung als energieabsorbierende Strukturen in Fahrzeugen, insbesondere in Strassen- und Schienenfahrzeugen, wie PKW's, LKW's, Busse, Strassenbahnen oder Nah- und Fernverkehrszüge. Die erfindungsgemässen Deformationselemente finden insbesondere Verwendung im Frontbereich genannter Fahrzeuge. Ferner können die besagten Deformationselemente auch im Heckbereich oder gegebenenfalls auch im Seitenbereich genannter Fahrzeuge zur Anwendung gelangen.

Die genannten Deformationselemente können z.B. integraler Bestandteil der Karosserie, insbesondere von Fahrzeuglängsträgern, sein. Die genannten Deformationselemente können ferner an der Fahrzeugkarosserie befestigt sein. Sie können z.B. Verbindungselemente zwischen Stossfänger und Karosseriestruktur bzw. Längsträger sein. Die Deformationselemente können beispielsweise im Frontund/oder Heckbereich von Fahrzeugen angeordnet sein, wobei diese mit ihrer Profillängsachse bevorzugt parallel zur Fahrzeuglängsachse angeordnet sind.

Den erfindungsgemässen Deformationselementen liegt die Erkenntnis zugrunde, dass in deren Eck- und Knotenbereichen eine höhere spezifische Energieabsorption durch den Faltvorgang stattfindet als in den Profilwandabschnitten zwischen den Eck- bzw. Knotenbereichen. Diese Erkenntnis wurde nun dahingehend umgesetzt, dass gegenüber Deformationselementen gemäss dem Stand der Technik, welche in ihrer Masse, Abmessung und Formgebung mit den erfindungsgemässen Deformationselementen vergleichbar sind, mehr Masse in den Eckbereichen und/oder weniger Masse in den Profilwandbereichen zwischen den Eckbereichen angeordnet ist.

Auf diese Weise kann z.B. durch die Umverteilung von Masse aus den Profilwandbereichen in die Eck- bzw. Knotenbereiche bei gleichbleibender Gesamtmasse eine höhere spezifische Energieabsorption erzielt werden, so dass mit einem erfindungsgemässen Deformationselement z.B. eine 10-30% höhere spezifische Energieabsorption erreicht werden kann als mit einem in der Dimension und Formgebung vergleichbaren Deformationselement gemäss dem Stand der Technik.

Im folgenden wird die Erfindung beispielhaft und mit Bezug auf die beiliegenden Zeichnungen näher erläutert. Es zeigen:
- Fig. 1:: Querschnitt eines Deformationselements gemäss Stand der Technik;
- Fig. 2:: Querschnitt eines erfindungsgemässen Deformationselements;
- Fig. 3:: Querschnitt eines weiteren erfindungsgemässen Deformationselements;
- Fig. 4:: Seitenansicht eines gefalteten Deformationselements gemäss Fig. 3;
- Fig. 5:: perspektivische Ansicht eines erfindungsgemässen Deformationselements gemäss Fig. 2;
- Fig. 6a-f:: Querschnitte durch Eckbereiche weiterer erfindunggemässen Deformationselemente;
- Fig. 6g:: Querschnitt eines weiteren erfindungsgemässen Deformationselements.

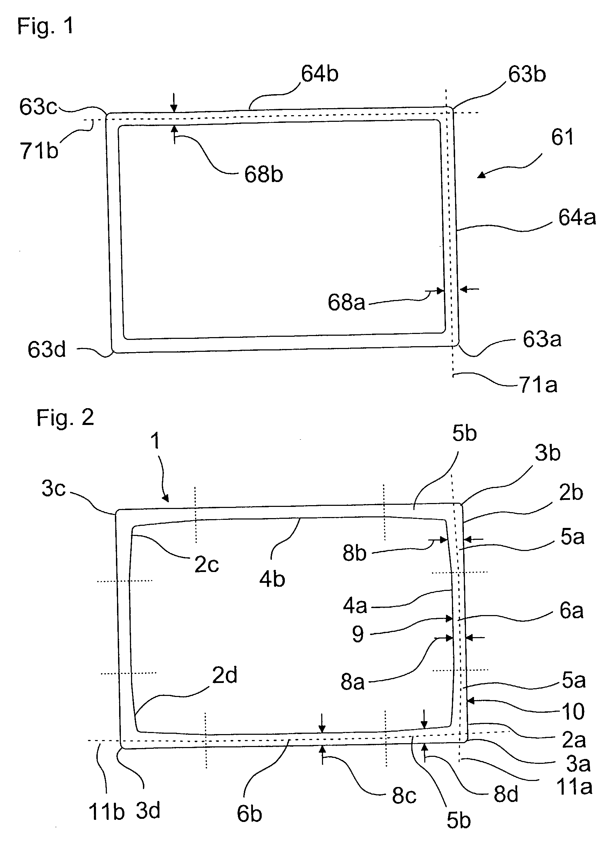

Das Deformationselement 61 nach dem Stand der Technik gemäss Fig. 1 ist ein Einkammer-Hohlprofil mit äusseren Profilwänden 64a,b und Ecken 63a-d. Die äusseren Profilwände 64a,b weisen jeweils von Ecke zu Ecke eine, orthogonal zur entsprechenden Profilwandmittelfläche 71a,b gemessene, uniforme Wanddicke 68a,b auf.

Aus Gründen der Übersicht wurden nicht sämtliche redundanten Merkmale in Fig. 1 mit Bezugszeichen versehen.

Das erfindungsgemässe Deformationselement 1 gemäss Fig. 2 ist ein Einkammer-Hohlprofil. Das Deformationselement 1 enthält äussere Profilwände 4a,b mit aussen 10 und innen 9 liegenden Profilwandflächen. Die äusseren Profilwände 4a,b sind in Profilwand-Endabschnitte 5a,b und Profilwand-Zwischenabschnitte 6a,b gegliedert. Ferner weist das Deformationselement Eckbereiche 2a-d auf, welche durch jeweils zwei orthogonal aufeinander treffende und Ecken 3a-d ausbildende Profilwand-Endabschnitte 5a,b gebildet sind. Zwischen zwei Profilwand-Endabschnitten einer Profilwand 4a,b ist jeweils ein Profilwand-Zwischenabschnitt 6a,b angeordnet. Die Profilwand-Endabschnitte 5a,b weisen eine Wanddicke 8b,d auf, welche grösser ist als die Wanddicke 8a,c der benachbarten Profilwand-Zwischenabschnitte 6a,b, wobei letztere Wanddicken 8a,c über die gesamte Abschnittslänge uniform sind. Die Wanddicke 8b,d der Profilwand-Endabschnitte 5a,b nimmt ausgehend von den angrenzenden Profilwand-Zwischenabschnitten 6a,b zu den Ecken 3a-d hin kontinuierlich zu. Die Wanddicken 8a-d sind dabei orthogonal zu den entsprechenden Profilwandmittelflächen 11a,b gemessen.

Aus Gründen der Übersicht wurden nicht sämtliche redundanten Merkmale in Fig. 2 mit Bezugszeichen versehen.

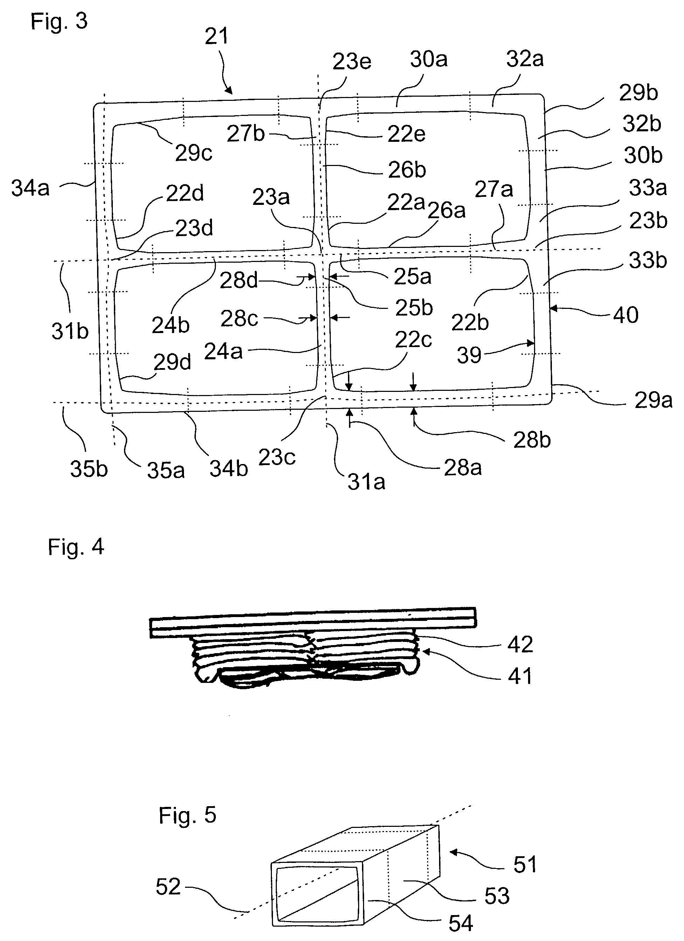

Das Deformationselement 21 gemäss Fig. 3 ist ein Mehrkammer-Hohlprofil. Das Deformationselement 21 enthält äussere Profilwände 34a,b mit aussen 40 und innen 39 liegenden Profilwandflächen. Die äusseren Profilwände 34a,b sind in Eckbereiche 29a-d bzw. Knotenbereiche 23b-e ausbildende Profilwand-Endabschnitte 32a,b, 33a,b und Profilwand-Zwischenabschnitte 30a,b gegliedert. Die Eckbereiche 29a-d werden durch jeweils zwei orthogonal aufeinander treffende und Ecken ausbildende Profilwand-Endabschnitte 32a,b gebildet. Im weiteren sind die Eckbereiche 29a-d analog den Eckbereichen 2a-d gemäss Fig. 2 ausgebildet. Es wird auf die betreffende Beschreibung verwiesen.

Das Mehrkammer-Hohlprofil 21 enthält zwei sich kreuzende und einen zentralen Knotenbereich 22a ausbildende innere Profilwände 24a,b, welche den Profilhohlraum in querschnittlich vier Profilkammern unterteilen. Die inneren Profilwände 24a,b sind in Profilwand-Endabschnitte 25a,b; 27a,b und Profilwand-Zwischenabschnitte 26a,b gegliedert. Die Profilwand-Endabschnitte 25a,b der inneren Profilwände 24a,b bilden einen zentralen Knotenbereich 22a mit einem Knoten 23a aus.

Die Profilwand-Endabschnitte 27a,b der inneren Profilwände 24a,b bilden ferner an den Kreuzungsstellen zu den äusseren Profilwänden 34a,b äussere Knotenbereiche 22b-e mit den Knoten 23b-e aus. Zwischen zwei Profilwand-Endabschnitten 27a,b und 25a,b, d.h. zwischen dem zentralen 22a und den äusseren Knotenbereichen 22b-e sind Profilwand-Zwischenabschnitte 26a,b angeordnet. Zwischen den Profilwand-Endabschnitten 32a,b der Eckbereiche und den Profilwand-Endabschnitten 33a,b der jeweils benachbarten äusseren Knotenbereiche 22b-e sind Profilwand-Zwischenabschnitte 30a,b angeordnet.

Die Profilwand-Endabschnitte 25a,b; 27a,b; 32a,b; 33a,b des inneren 22a und der äusseren Knotenbereiche 22b-e sowie der Eckbereiche 29a-d weisen eine zu den Knoten 23a-e bzw. zu den Ecke 29a-d hin kontinuierliche Zunahme der Wanddicke 28a,d auf, wobei die besagte Wanddicke 28a,d grösser ist als die Wanddicke 28b,c der benachbarten Profilwand-Zwischenabschnitte 30a,b, 26a,b.

Die Wanddicke 28b,c der Profilwand-Zwischenabschnitte 30a,b, 26a,b ist uniform. Die Wanddicken 28a-d sind dabei orthogonal zu den dazugehörigen Profilwandmittelflächen 35a,b, 31a,b gemessen.

Aus Gründen der Übersicht wurden nicht sämtliche redundanten Merkmale in Fig. 3 mit Bezugszeichen versehen.

Fig. 4 zeigt ein Mehrkammerhohlprofil 41 gemäss Fig. 3 in vollständig balgförmig gefaltetem Zustand. Das Mehrkammerhohlprofil 41 zeichnet sich durch eine gleichmässige Ausbildung der Falten 42 aus. Das Verhältnis des Deformationsweges zur Gesamtlänge des Deformationselements bestimmt die sogenannte Ausnutzung.

Fig. 5 zeigt ein Deformationselement 51 gemäss Fig. 2 mit der dazugehörigen Profillängsachse 52 in perspektivischer Ansicht. Ebenfalls dargestellt ist ein in Profillängsrichtung gemessener Profillängsabschnitt 53 sowie der stirnseitige Profilendabschnitt 54.

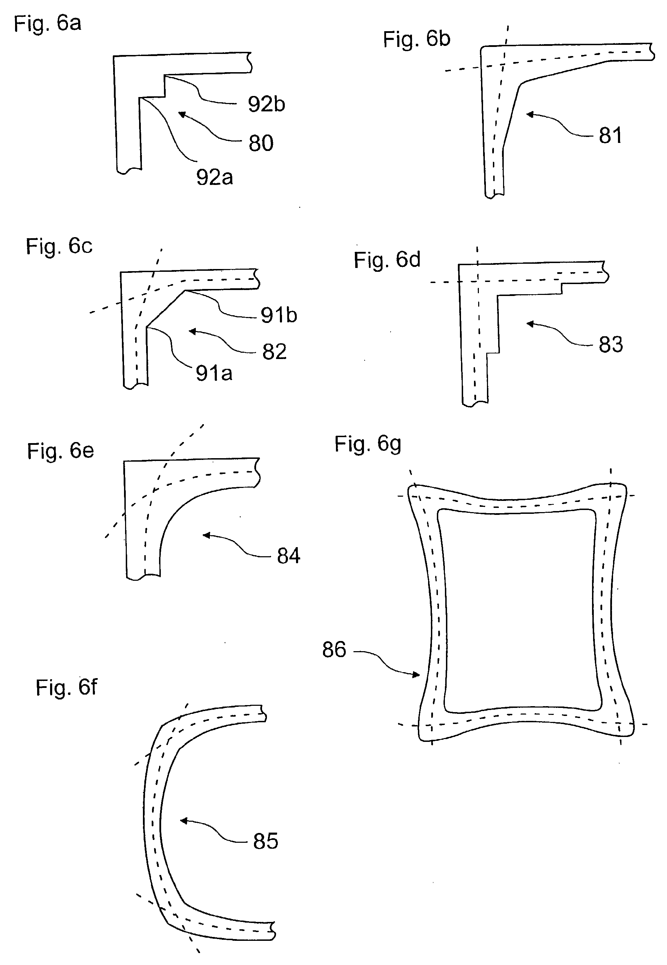

Die Beispiele gemäss Fig. 6a-f zeigen weitere Varianten zur Ausgestaltung der Eckbereiche 80,81,82,83,84,85 bzw. der dazugehörigen Profilwand-Endabschnitte von Deformationselementen mit den dazugehörigen Profilwandmittelflächen im Rahmen der erfindungsgemässen Lösung. In den Beispielen gemäss Fig. 6a und 6c weist der Eckbereich an seiner innen liegenden Wandung eine Verbreiterung der Profilwandendabschnitte auf, derart dass anstelle einer einzelnen Eckkehlung zwei in Distanz zu einander stehende Kehlungen 91a,b; 92a,b ausgebildet werden.

Fig. 6g zeigt ein Deformationselement 86 mit eingebauchten Seitenwänden. Das genannte Deformationselement 86 wird durch nachfolgende Innenhochdruck-Umformung in ein masshaltiges, kastenförmiges Endprofil umgeformt.

## Patentansprüche

1. Deformationselement (1) aus einem Ein- oder Mehrkammer-Hohlprofil mit einer Profillängsachse (52) zur Aufnahme von in Richtung der Profillängsachse (52) einwirkender Aufprallenergie, enthaltend innen und aussen liegende Profilwandflächen (9,10) ausbildende äussere Profilwände (4a,b) mit Profilwand-Endabschnitten (5a,b) und Ecken (3a-d) ausbildende Eckbereiche (2a-d), wobei die Eckbereiche (2a-d) durch zwei gegeneinander stossende Profilwand-Endabschnitte (5a,b) gebildet sind,
**dadurch gekennzeichnet, dass**
die Wanddicke (8b,d) eines Profilwand-Endabschnitts (5a,b) wenigstens eines Eckbereichs (2a-d), wenigstens über einen in Profillängsrichtung (52) gemessenen Profillängsabschnitt (53) grösser ist als die Wanddicke (8a,c) des zum Profilwand-Endabschnitt (5a,b) benachbarten Profilwandabschnitts (6a,b), so dass im Eckbereich (2a-d) eine Profilwandverdickung ausgebildet ist, wobei im Vergleich zu einem Deformationselement mit uniformen Wanddicken jedoch von gleicher Gestalt und Gesamtmasse eine höhere spezifische Energieabsorption erzielt wird.

2. Deformationselement nach Anspruch 1, **dadurch gekennzeichnet, dass** die Wanddicke (8b,d) der Profilwand-Endabschnitte (5a,b) wenigstens eines Eckbereiches (2a-d), vorzugsweise aller Eckbereiche, wenigstens über einen in Profillängsrichtung (52) gemessenen Profilabschnitt (53), vorzugsweise über die gesamte Länge des Deformationselements (1), grösser ist als die Wanddikke (8a,c) des zum Profilwand-Endabschnitt (5a,b) benachbarten Profilwandabschnitts (6a,b).

3. Deformationselement nach einem der Ansprüche 1 bis 2, **dadurch gekennzeichnet, dass** der Eckbereich wenigstens über einen in Profillängsrichtung (52) gemessenen Profillängsabschnitt (53) unter Ausbildung zweier Kehlungen (91 a,b) eine Verbreiterung der Profilwand-Endabschnitte aufweist.

4. Deformationselement nach einem der Ansprüche 1 bis 3, **dadurch gekennzeichnet, dass** die Wanddicke (8b,d) der Profilwand-Endabschnitte (5a,b) zur Ecke (3a-d) hin kontinuierlich zunimmt.

5. Deformationselement nach einem der Ansprüche 1 bis 4, **dadurch gekennzeichnet, dass** die maximale Wanddicke (8b,d) des Profilwand-Endabschnitts (5a,b) wenigstens 5%, vorzugsweise wenigstens 15%, insbesondere wenigstens 20%, und höchstens 200%, vorzugsweise höchstens 150%, insbesondere höchstens 100% grösser ist als die minimale Wanddicke (8a,c) des zum Profilwand-Endabschnitt (5a,b) benachbarten Profilwandabschnitts (6a,b).

6. Deformationselement nach einem der Ansprüche 1 bis 5, **dadurch gekennzeichnet, dass** die mittlere Wanddicke (8b,d) des Profilwand-Endabschnitts (5a,b) wenigstens 5%, vorzugsweise wenigstens 15%, insbesondere wenigstens 20%, und höchstens 200%, vorzugsweise höchstens 100%, insbesondere höchstens 60% grösser ist als die mittlere Wanddicke (8a,c) des zum Profilwand-Endabschnitt (5a,b) benachbarten Profilwandabschnitts (6a,b).

7. Deformationselement nach einem der Ansprüche 1 bis 6, **dadurch gekennzeichnet, dass** die Wanddicke (8a,c) des zum Profilwand-Endabschnitt (5a,b) benachbarten Profilwandabschnitts (6a,b) uniform ist.

8. Deformationselement nach einem der Ansprüche 1 bis 7, **dadurch gekennzeichnet, dass** die aussen liegende Profilwandfläche (10) plan ist und die innen liegende Profilwandfläche (9) in den Profilwand-Endabschnitten (5a,b) eine relativ zur aussen liegenden Profilwandfläche (10) gemessene, die Wanddicke (8b,d) erhöhende Steigung aufweist.

9. Deformationselement nach einem der Ansprüche 1 bis 8, **dadurch gekennzeichnet, dass** das Deformationselement (1) ein kastenförmiges Ein- oder Mehrkammer-Hohlprofil ist und zwischen zwei Profilwand-Endabschnitten (5a,b) einer äusseren Profilwand (4a,b) ein Profilwand-Zwischenabschnitt (6a,b) angeordnet ist, wobei der Profilwand-Zwischenabschnitt (6a,b) einem dem Profilwand-Endabschnitt (5a,b) benachbarten Profilwandabschnitt (6a,b) entspricht.

10. Deformationselement nach einem der Ansprüche 1 bis 9, **dadurch gekennzeichnet, dass** die Länge des Profilwand-Endabschnitts (5a,b) eines Eckbereichs (2a-d) wenigstens 5%, vorzugsweise wenigstens 10 %, insbesondere wenigstens 15%, und höchstens 45%, vorzugsweise höchstens 35%, insbesondere höchstens 25% der Länge der dazugehörigen Profilwand (4a) entspricht.

11. Deformationselement nach einem der Ansprüche 1 bis 10, **dadurch gekennzeichnet, dass** das Deformationselement (21) ein Mehrkammer-Hohlprofil mit wenigstens einer, Knotenbereiche (22a-e) ausbildenden inneren Profilwand (24a,b) ist, wobei die Knotenbereiche (22a-e) durch wenigstens zwei in einem Winkel gegeneinander stossenden Profilwand-Endabschnitte (33a,b; 27a,b; 25a,b) von äusseren und/oder inneren Profilwänden (34a,b, 24a,b) gebildet sind, und das Deformationselement (21) in den Profilwand-Endabschnitten (33a,b; 27a,b; 25a,b) der Knotenbereiche eine grössere Wanddicke aufweist als im zum Profilwand-Endabschnitt benachbarten Profilwandabschnitt 26a,b; 30a,b).

12. Verwendung von Deformationselementen nach einem der Ansprüche 1 bis 11 in Fahrzeugen, insbesondere in Strassen- und Schienenfahrzeugen.
